# DEMANDE DE BREVET EUROPEEN

(11) **EP 4 703 619 A1**
(43) Date de publication de la demande: **04.03.2026**
(21) Numéro de dépôt: 25198870.5
(22) Date de dépôt: 28.08.2025
(51) Int. Cl.: F16L 37/34, F16L 37/56

(54) **SYSTÈME DE CONNEXION HYDRAULIQUE**

(30) Priorité: 29.08.2024 FR 2409244
(71) Demandeur: M-Extend, 35690 Acigne (FR)
(72) Inventeur: BOURGEOIS, Dimitri, 35530 Servon sur Vilaine (FR)
(74) Mandataire: Fidal Innovation

(57) **Abrégé**

Le système de connexion hydraulique comprend un premier connecteur hydraulique (2) et un deuxième connecteur hydraulique (3).
le système de connexion hydraulique comprend un système mécanique d'assistance à la connexion (27).
le premier connecteur hydraulique (2) comprend au moins un premier coupleur hydraulique (8a, 8b).
le deuxième connecteur hydraulique (3) comprend au moins un deuxième coupleur hydraulique (21a, 21b).
les coupleurs hydrauliques (8, 21) comprennent une jupe externe (13, 22) et un bouchon interne (14, 23).

Une jupe externe (13, 22) comprend un échappement hydraulique (34), et le système de connexion hydraulique comprend un pion d'obturation (39) synchronisé à l'organe de commande d'actionnement (33) pour ouvrir et/ou fermer l'échappement hydraulique (34) au cours de l'actionnement de l'organe de commande d'actionnement (33).

## Description

### DOMAINE DE L'INVENTION

La présente invention se rapporte aux systèmes de connexion hydraulique.

Plus précisément, l'invention se rapporte à un système de connexion hydraulique.

### ARRIÈRE-PLAN TECHNOLOGIQUE

Dans le domaine de l'hydraulique, il est connu d'utiliser un système de connexion hydraulique entre deux systèmes mécaniques. Le système de connexion hydraulique comprend un premier et un deuxième connecteurs hydrauliques complémentaires susceptibles d'être alternativement connectés ou déconnectés l'un de l'autre. Lorsqu'ils sont connectés, une connexion hydraulique a lieu, ou peut avoir lieu, entre les deux systèmes mécaniques. Cela permet par exemple d'actionner hydrauliquement un deuxième système mécanique à partir d'une source de fluide hydraulique du premier système mécanique.

Etant donné que ces connecteurs hydrauliques peuvent être lourds et encombrants, il est connu un système mécanique d'assistance à la connexion. Un tel système mécanique d'assistance à la connexion va typiquement comprendre un premier dispositif mécanique porté par le premier connecteur hydraulique et un deuxième dispositif mécanique porté par le deuxième connecteur hydraulique, et complémentaire du premier dispositif mécanique. L'actionnement d'un organe de commande d'actionnement, de type levier ou manette, par un opérateur, dans un sens de connexion, va générer une coopération des premier et deuxième dispositifs mécaniques, par exemple par effet de came, ayant pour effet de rapprocher l'un de l'autre les premier et deuxième connecteurs hydrauliques.

Chacun des connecteurs hydrauliques considérés comprend un ensemble de coupleurs hydrauliques. Pour fixer les idées, on appellera premiers coupleurs hydrauliques les coupleurs du premier connecteur hydraulique, et deuxièmes coupleurs hydrauliques les coupleurs du deuxième connecteur hydraulique. Dans la configuration déconnectée du système de connexion hydraulique, chaque coupleur hydraulique est en configuration fermée étanche, ce qui permet d'éviter des fuites de fluide hydraulique.

Un premier coupleur hydraulique du premier connecteur hydraulique et un deuxième coupleur hydraulique du deuxième connecteur hydraulique sont complémentaires l'un de l'autre, de sorte que, en configuration connectée du système de connexion hydraulique, le fluide hydraulique peut s'écouler entre les premier et deuxième connecteurs hydrauliques.

La pression hydraulique par le fluide hydraulique reste présente même en absence d'actionnement de l'outil. Par conséquent, après cet actionnement, cette pression hydraulique s'oppose aux efforts mécaniques de connexion et de déconnexion mécanique du système de connexion hydraulique, de sorte que des efforts importants sont nécessaires pour réaliser la connexion mécanique.

L'invention vise ainsi à apporter une solution à ce problème.

### RÉSUMÉ DE L'INVENTION

Ainsi, l'invention se rapporte à un système de connexion hydraulique comprenant un premier connecteur hydraulique et un deuxième connecteur hydraulique,
le système de connexion hydraulique comprenant un système mécanique d'assistance à la connexion, le système mécanique d'assistance à la connexion comprenant un premier et un deuxième dispositifs mécaniques portés respectivement par l'un et l'autre des premier et deuxième connecteurs hydrauliques, le premier dispositif mécanique comprenant un organe de commande d'actionnement, et coopérant mécaniquement avec le deuxième dispositif mécanique de sorte qu'un actionnement de l'organe de commande d'actionnement par un opérateur génère un mouvement relatif des premier et deuxième connecteurs hydrauliques entre une configuration déconnectée et une configuration connectée du système de connexion hydraulique,
le premier connecteur hydraulique comprenant au moins un premier coupleur hydraulique,
le deuxième connecteur hydraulique comprenant au moins un deuxième coupleur hydraulique,
chaque coupleur hydraulique comprenant une jupe externe et un bouchon interne définissant entre eux une chambre hydraulique, le bouchon interne et la jupe externe correspondante étant montés mobiles axialement l'un par rapport à l'autre entre une configuration fermée où ils coopèrent de manière étanche l'un avec l'autre de manière à fermer la chambre, et une configuration ouverte dans laquelle la chambre est ouverte, le bouchon interne et la jupe externe correspondante étant sollicités l'un par rapport à l'autre vers la configuration fermée dans la configuration déconnectée du système de connexion hydraulique,
les premier et deuxièmes coupleurs hydrauliques étant placés, en configuration connectée du système de connexion hydraulique, en configuration ouverte pour autoriser une circulation de fluide hydraulique entre le premier et le deuxième connecteurs hydrauliques,
au moins une jupe externe comprend un échappement hydraulique, et le système de connexion hydraulique comprend en outre un pion d'obturation synchronisé à l'organe de commande d'actionnement adapté pour ouvrir et/ou fermer l'échappement hydraulique au cours de l'actionnement de l'organe de commande d'actionnement.

Grâce à ces dispositions, on peut réaliser une décompression hydraulique synchronisée aux étapes de connexion mécanique du système de connexion hydraulique. Par conséquent, la connexion mécanique s'en trouve facilitée.

Selon différents aspects, il est possible de prévoir l'une et/ou l'autre des caractéristiques ci-dessous prises seules ou en combinaison.

Selon une réalisation, le premier connecteur hydraulique comprend au moins deux premiers et coupleurs hydrauliques, le deuxième connecteur hydraulique comprend au moins deux deuxièmes coupleurs hydrauliques, et une première paire de premier et deuxième coupleurs hydrauliques forment un côté haute pression du système de connexion hydraulique, et une deuxième paire de premier et deuxième coupleurs hydrauliques forment un côté basse pression du système de connexion hydraulique.

Selon une réalisation, l'organe de commande d'actionnement est solidaire d'une came formée pour déplacer le pion d'obturation à l'encontre de la sollicitation d'un organe de sollicitation.

Selon une réalisation, ladite came est adaptée pour déplacer un actionneur à l'encontre de la sollicitation d'un organe de sollicitation, ledit actionneur étant adapté pour déplacer au moins deux pions d'obturation associés chacun à un coupleur respectif.

Selon une réalisation, le pion d'obturation est synchronisé à l'organe de commande d'actionnement de façon qu'un passage de l'organe de commande d'actionnement d'une première position correspondant à la configuration déconnectée des premier et deuxième connecteurs hydrauliques à une deuxième position correspondant à la configuration connectée des premier et deuxième connecteurs hydrauliques cause, dans une première phase, l'ouverture de l'échappement hydraulique puis, dans une deuxième phase, la fermeture de l'échappement hydraulique.

Selon une réalisation, le système de connexion hydraulique comprend en outre un accumulateur disposé en aval de l'échappement hydraulique.

Selon un autre aspect, l'invention se rapporte à un connecteur hydraulique comprenant l'ensemble des caractéristiques du premier connecteur hydraulique d'un tel système de connexion hydraulique.

Selon un autre aspect, l'invention se rapporte à un procédé de connexion ou de déconnexion hydraulique dans lequel
disposant d'un premier connecteur hydraulique et d'un deuxième connecteur hydraulique,
disposant d'un système mécanique d'assistance à la connexion, le système mécanique d'assistance à la connexion comprenant un premier et un deuxième dispositifs mécaniques portés respectivement par l'un et l'autre des premier et deuxième connecteurs hydrauliques, le premier dispositif mécanique comprenant un organe de commande d'actionnement, et coopérant mécaniquement avec le deuxième dispositif mécanique de sorte qu'un actionnement de l'organe de commande d'actionnement par un opérateur génère un mouvement relatif des premier et deuxième connecteurs hydrauliques entre une configuration déconnectée et une configuration connectée du système de connexion hydraulique,
le premier connecteur hydraulique comprenant au moins un premier coupleur hydraulique,
le deuxième connecteur hydraulique comprenant au moins un deuxième coupleur hydraulique,
chaque coupleur hydraulique comprenant une jupe externe et un bouchon interne définissant entre eux une chambre hydraulique, le bouchon interne et la jupe externe correspondante étant montés mobiles axialement l'un par rapport à l'autre entre une configuration fermée où ils coopèrent de manière étanche de manière à fermer la chambre, et une configuration ouverte dans laquelle la chambre est ouverte, le bouchon interne et la jupe externe correspondante étant sollicités l'un par rapport à l'autre vers la configuration fermée dans la configuration déconnectée du système de connexion hydraulique,
les premier et deuxièmes coupleurs hydrauliques étant placés, en configuration connectée du système de connexion hydraulique, en configuration ouverte pour autoriser une circulation de fluide hydraulique entre le premier et le deuxième connecteurs hydrauliques,
au moins une jupe externe comprenant un échappement hydraulique, et le système de connexion hydraulique comprenant en outre un pion d'obturation synchronisé à l'organe de commande d'actionnement adapté pour alternativement ouvrir ou fermer l'échappement hydraulique au cours de l'actionnement de l'organe de commande d'actionnement,
un opérateur actionne l'organe de commande d'actionnement de manière à générer de manière synchronisée :
   - un mouvement relatif des premier et deuxième connecteurs hydrauliques entre une configuration déconnectée et une configuration connectée du système de connexion hydraulique et
   - l'ouverture et/ou la fermeture de l'échappement hydraulique par un pion d'obturation.

### BRÈVE DESCRIPTION DES DESSINS

Des modes de réalisation de l'invention seront décrits ci-dessous par référence aux dessins, décrits brièvement ci-dessous :
[Fig. 1] représente de manière schématique un système équipé d'un système de connexion hydraulique selon un exemple de réalisation de l'invention.
[Fig. 2] est une vue en coupe transversale représentant un deuxième connecteur hydraulique selon un premier mode de réalisation.
[Fig. 3] est la même vue en coupe que la figure 2 pour un premier connecteur hydraulique complémentaire du deuxième connecteur hydraulique du premier mode de réalisation.
[Fig. 4] est la même vue en coupe que les figures 2 et 3 représentant le système de connexion hydraulique comprenant les premier et deuxième connecteurs hydrauliques des figures 2 et 3, respectivement, en configuration déconnectée.
[Fig. 5] est une vue en coupe, dans un plan parallèle au plan de la figure 4, du système de connexion hydraulique comprenant les premier et deuxième connecteurs hydrauliques des figures 2 et 3, respectivement, en configuration déconnectée.
[Fig. 6] est une vue en coupe d'un exemple de mécanisme d'assistance à la connexion en configuration déconnectée.
[Fig. 7] est une vue en coupe transversale au plan des figures 4 et 5 du premier connecteur hydraulique.
[Fig. 8] est la même vue que la figure 6, dans la configuration connectée du système de connexion hydraulique.
[Fig. 9] est la même vue que la figure 4 dans la configuration intermédiaire de la figure 8.
[Fig. 10] est la même vue que les figures 4 et 9 dans la configuration connectée du système de connexion hydraulique.
[Fig. 11] est un schéma hydraulique d'un autre mode de réalisation.

Sur les dessins, des références identiques désignent des objets identiques ou similaires.

### DESCRIPTION DÉTAILLÉE

L'invention concerne un système de connexion hydraulique 1 comprenant un premier connecteur hydraulique 2 et un deuxième connecteur hydraulique 3.

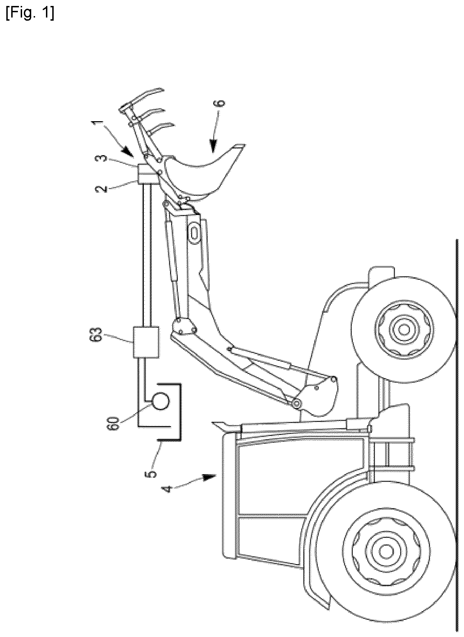

Pour fixer les idées, le premier connecteur hydraulique 2 peut être porté par un engin roulant motorisé 4 de type tracteur, muni d'un réservoir de fluide hydraulique 5 (représenté schématiquement sur la figure 1), et le deuxième connecteur hydraulique 3 peut être porté par un outil 6 amovible destiné à équiper l'engin 4. Ainsi, l'engin 4 peut être assemblé à l'outil 6, et l'outil 6 peut être commandé hydrauliquement depuis l'engin 4. Puis, l'outil 6 peut être désassemblé de l'engin 4, par exemple pour des raisons de maintenance, ou pour utiliser l'engin 4 avec un autre outil hydraulique. L'outil 6 est par exemple une pince.

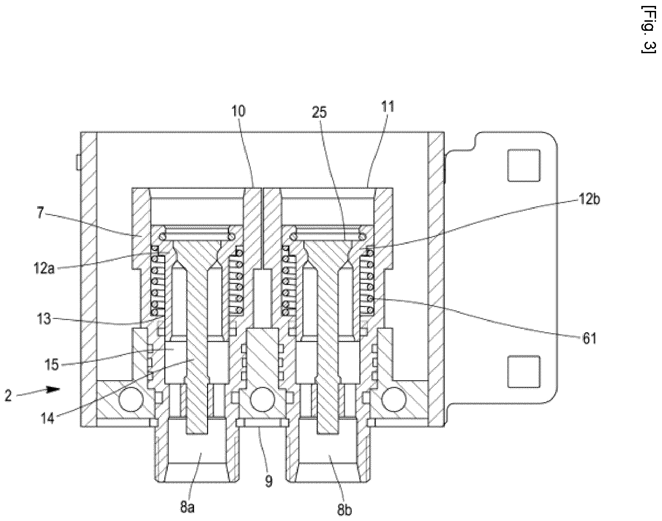

Comme visible sur la figure 3, le premier connecteur hydraulique 2 comprend un boitier 7. La description sera donnée ici par référence à un axe longitudinal X correspondant à la direction de connexion des premier et deuxième connecteurs hydrauliques 2, 3, également appelée « direction longitudinale ». Les directions transverses à la direction longitudinale sont appelées « directions transverses ». Le premier connecteur hydraulique 2 définit une pluralité de passages hydrauliques 8, en l'occurrence deux passages hydrauliques 8a et 8b. Les passages hydrauliques sont disposés en parallèle entre eux, et parallèles à l'axe longitudinal X. Ils s'étendent, le long de celui-ci, depuis une extrémité arrière 9 du connecteur hydraulique 2 jusqu'à une extrémité avant 10 disposée à l'opposé de l'extrémité arrière, et débouchant au niveau d'une face de connexion 11 du premier connecteur hydraulique 2. Dans le cadre de l'invention, le nombre et l'agencement des passages hydrauliques peut varier.

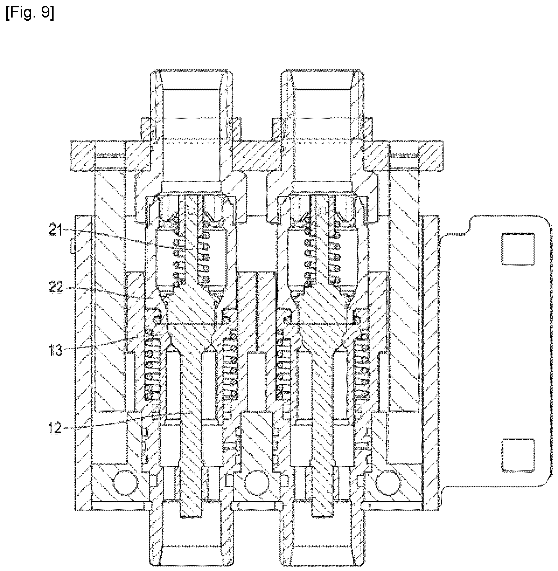

Le premier connecteur hydraulique 2 comprend des coupleurs hydrauliques, qualifiés ici de premiers coupleurs hydrauliques 12. Ces coupleurs sont qualifiés de « premiers » pour faire partie du premier connecteur 2. Il y a autant de coupleurs hydrauliques que de passages hydrauliques 8. Chaque coupleur hydraulique 12 associé à un passage hydraulique 8 est désigné en utilisant le même suffixe « a », « b » que le passage hydraulique correspondant 8a, 8b. Le coupleur hydraulique 12a comprend une jupe externe 13 et un bouchon interne 14. Le bouchon interne 14 est solidaire du boitier 7. La jupe 13 est dite « externe » et le bouchon 14 « interne » car la jupe entoure radialement le bouchon. La jupe externe 13 est mobile par rapport au bouchon 14 , entre une position fermée, visible sur la figure 3, dans lequel il coopère avec le bouchon 14 pour fermer la chambre hydraulique 15 définie entre la jupe externe 13 et le bouchon interne 14, et une position ouverte, visible sur les figures 9 et suivantes, où la chambre 15 est ouverte. Le passage entre les positions ouverte et fermée de la jupe externe 13 peut se faire par translation le long de l'axe longitudinal. Un ressort de rappel 61 sollicite la jupe externe 13 vers sa position fermée. Dans cette position, comme représenté sur la figure 3, le connecteur hydraulique 2 est fermé de manière étanche au niveau de la face de connexion 11, de sorte que le premier connecteur hydraulique 2 ne fuit pas.

On notera que, dans le cadre de l'invention, les coupleurs hydrauliques du premier connecteur hydraulique sont opérés de manière similaire en parallèle. Ainsi, la description d'un des coupleurs du premier connecteur hydraulique, en terme de constitution et de cinématique, s'applique également aux autres coupleurs hydrauliques du premier connecteur hydraulique.

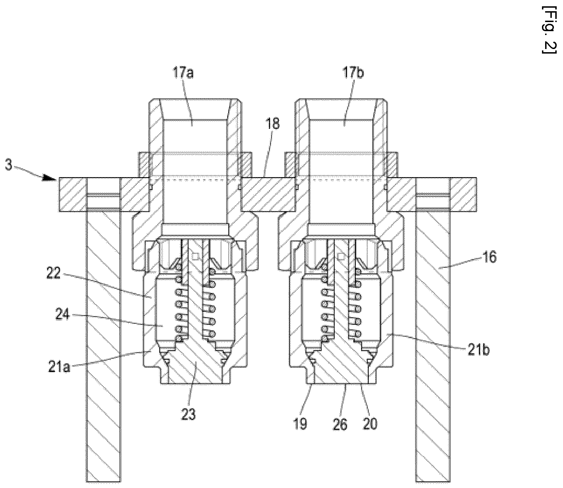

Comme visible sur la figure 2, le deuxième connecteur hydraulique 3 comprend un boitier 16. Le deuxième connecteur hydraulique 3 définit une pluralité de passages hydrauliques 17. Le nombre de passages hydrauliques 17 du deuxième connecteur hydraulique 3 est identique au nombre de passages hydrauliques 8 du premier connecteur hydraulique 2, en l'occurrence deux passages hydrauliques 17a et 17b. Les passages hydrauliques sont disposés en parallèle entre eux, et parallèles à l'axe longitudinal X. Ils s'étendent, le long de celui-ci, depuis une extrémité arrière 18 du deuxième connecteur hydraulique 3 jusqu'à une extrémité avant 19 disposée à l'opposé de l'extrémité arrière, et débouchant au niveau d'une face de connexion 20 du deuxième connecteur hydraulique 3. Chaque passage hydraulique 17 du deuxième connecteur hydraulique 3 est associé à un passage hydraulique 8 respectif du premier connecteur hydraulique 2.

Le deuxième connecteur hydraulique 3 comprend des coupleurs hydrauliques, qualifiés ici de deuxièmes coupleurs hydrauliques 21. Ces coupleurs sont qualifiés de « deuxièmes » pour faire partie du deuxième connecteur 3. Il y a autant de coupleurs hydrauliques que de passages hydrauliques 17. Chaque coupleur hydraulique 21 associé à un passage hydraulique 17 est désigné en utilisant le même suffixe « a », « b » que le passage hydraulique correspondant 17a, 17b. Le coupleur hydraulique 21a comprend une jupe externe 22 solidaire de, notamment constituée par le boitier 16, et un bouchon interne 23. La jupe 22 est dite « externe » et le bouchon 23 « interne » car la jupe entoure radialement le bouchon. Le bouchon interne 23 est mobile par rapport à la jupe externe 22, entre une position fermée, visible sur la figure 2, dans lequel il coopère avec la jupe externe 22 pour fermer la chambre hydraulique 24 définie entre la jupe externe 22 et le bouchon interne 23, et une position ouverte, visible sur les figures suivantes, où la chambre 24 est ouverte. Le passage entre les positions ouverte et fermée du bouchon interne 23 peut se faire par translation le long de l'axe longitudinal. Un ressort de rappel 62 sollicite le bouchon interne 23 vers sa position fermée. Dans cette position, comme représenté sur la figure 2, le connecteur hydraulique 3 est fermé de manière étanche au niveau de la face de connexion 20, de sorte que le deuxième connecteur hydraulique 3 ne fuit pas.

On notera que, dans le cadre de l'invention, les coupleurs hydrauliques du deuxième connecteur hydraulique sont opérés de manière similaire en parallèle. Ainsi, la description d'un des coupleurs du deuxième connecteur hydraulique, en terme de constitution et de cinématique, s'applique également aux autres coupleurs hydrauliques du deuxième connecteur hydraulique.

Avant la connexion du système hydraulique, les premier et deuxième connecteurs hydrauliques 2 et 3 se font face. L'un des boitiers peut être un boitier mâle, et l'autre boitier peut être un boitier femelle, et ceux-ci présentent des formes complémentaires, de sorte que l'un des boitiers est inséré dans l'autre boitier lors de la connexion hydraulique. De même, les faces de connexion 11 et 20 des premier et deuxième connecteurs hydrauliques 2 et 3, respectivement, se font face. Chaque premier coupleur 12 comporte une face frontale 25, chaque deuxième coupleur 21 comporte une face frontale 26, et les faces frontales 25, 26 d'un premier et d'un deuxième coupleurs associés l'un à l'autre se font face.

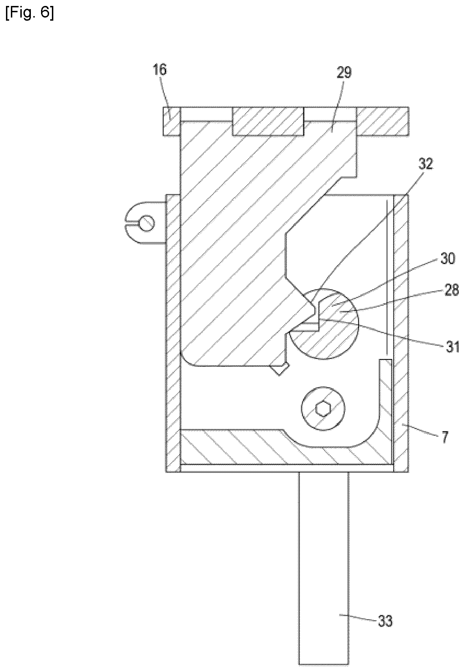

Le système de connexion hydraulique 1 comprend également un système mécanique d'assistance à la connexion 27. Comme visible par exemple sur la figure 6, ce système mécanique d'assistance à la connexion 27 comprend un premier dispositif mécanique 28 porté par le premier connecteur hydraulique 2 et un deuxième dispositif mécanique 29 porté par le deuxième connecteur hydraulique 3. Les premier et deuxième dispositifs mécaniques 28, 29 coopèrent entre eux mécaniquement au cours de la connexion des premier et deuxième connecteurs hydrauliques 2, 3 de manière à assister le mouvement de rapprochement de ces deux connecteurs 2, 3. Par exemple, le premier dispositif mécanique 28 comprend une came 30 montée pivotante sur le boîtier 7 du premier connecteur hydraulique 2, et comportant une surface de came 31 coopérant avec un suiveur de came 32, par exemple un pion, solidaire du boitier 16 du deuxième connecteur hydraulique 3. Le système mécanique d'assistance à la connexion 27 comprend en outre un organe de commande d'actionnement 33, par exemple un levier, actionnable par un utilisateur, pour causer la rotation de la came 30 par rapport au boitier 7 du premier connecteur hydraulique 2. Ainsi, lorsque la came 30 est en prise avec le suiveur de came 32, la rotation du levier cause la coopération du suiveur de came avec la came, et par la même le rapprochement des deux connecteurs hydrauliques 2, 3, l'un de l'autre.

D'autres mécanismes sont envisageables, comme par exemple un système à crémaillère.

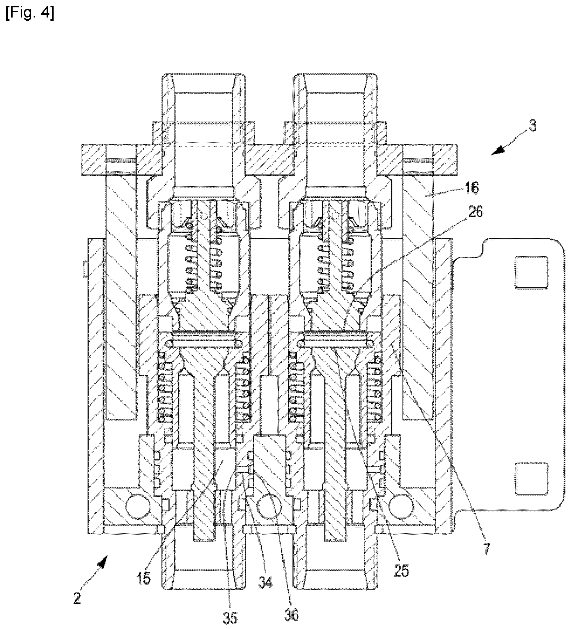

Comme visible également sur la figure 4, au moins l'une des jupes externes 13 du premier connecteur hydraulique 2 et, en l'occurrence, chacune de ces jupes, comporte un échappement hydraulique 34. L'échappement hydraulique 34 comprend un canal dont une première extrémité 35 débouche dans la chambre hydraulique 15, et la deuxième extrémité 36 est raccordée hydrauliquement à une ligne de retour basse pression en direction du réservoir de fluide hydraulique 5.

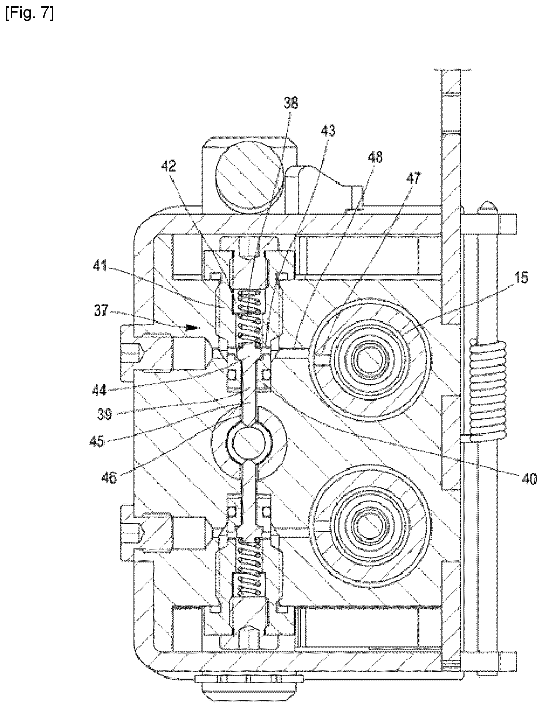

Une soupape 37, ou clapet anti-retour, est disposée dans l'échappement hydraulique 34. La soupape 37 peut prendre alternativement une configuration ouverte, dans laquelle l'échappement hydraulique 34 est ouvert et autorise le fluide hydraulique à s'écouler, ou une configuration fermée, dans laquelle l'échappement hydraulique 34 est fermé, et où l'écoulement hydraulique à travers l'échappement hydraulique 34 est interdit. Par défaut, l'échappement hydraulique 34 est dans sa configuration fermée, permettant ainsi de maintenir une pression hydraulique dans la chambre hydraulique 15. La soupape 37 comprend une jupe 41 cylindrique définissant un passage interne 42 traversant. L'échappement hydraulique 34 comprend un canal 43 traversant la jupe 41, dont une première extrémité est en connexion hydraulique avec la chambre 15, et la deuxième extrémité opposée débouche dans le passage interne 42. Un pion d'obturation 39 est monté mobile dans le passage interne 42 entre une première position, dite « ouverte », correspondant à la configuration ouverte de l'échappement hydraulique, et une deuxième position, dite « fermée », représentée sur la figure 7, correspondant à la configuration fermée de l'échappement hydraulique 34. Dans cette deuxième position, le pion d'obturation 39 est sollicité par un ressort de rappel 38 en contact étanche avec un siège 40 de la jupe 41. Plus précisément, le pion d'obturation 39 comprend une tête 44 large et un corps 45 étroit s'étendant depuis la tête, jusqu'à une extrémité 46 opposée qui fait saillie de la jupe 41.

Ainsi, comme visible sur la figure 7, l'échappement hydraulique 34 comprend un canal 47 disposé dans la jupe 13, un canal 48 disposé dans le boîtier 7, le canal 43 disposé dans la jupe 41, et le passage 42 raccordés hydrauliquement les uns aux autres.

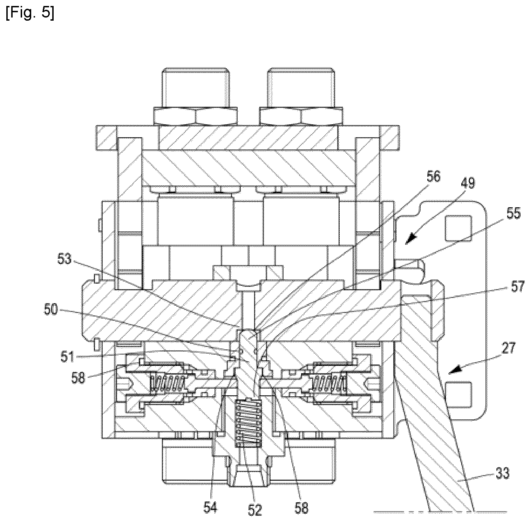

Le premier connecteur hydraulique 2 comprend également un système d'actionnement 49 adapté pour faire passer l'échappement hydraulique 34 de sa configuration fermée à sa configuration ouverte. Le système d'actionnement 49 est plus particulièrement visible sur la figure 5. Le système d'actionnement 49 comprend un passage 50 dans lequel un actionneur 51 est monté mobile, par exemple coulissant. Le système d'actionnement 49 est synchronisé avec l'organe de commande d'actionnement 33. Par exemple, le système d'actionnement 49 comprend une came 53 fixée à l'organe de commande d'actionnement 33. Ainsi, l'actionnement de l'organe de commande d'actionnement 33 cause le déplacement, en particulier la rotation autour d'un axe transverse à la direction longitudinale, de la came 53. L'axe de rotation de la came 53 correspond à l'axe de rotation du levier 23. Un ressort de rappel 52 sollicite l'actionneur 51 en direction de la came 53. Ainsi, l'actionneur 51 est continument en contact avec la came 53. La came 53 présente un profil configuré pour que la rotation de celle-ci autour de l'axe de pivotement déplace l'actionneur 51 selon son degré de liberté.

Comme visible également sur la figure 5, l'actionneur 51 comprend également une première portion d'actionnement 54 qui coopère avec l'extrémité 46 du pion d'obturation 39, de sorte qu'un déplacement de l'actionneur 51 déplace le pion d'obturation 39 à l'encontre de la sollicitation exercée par le ressort de rappel 38. Selon un exemple, l'actionneur 51 comprend ainsi un corps 55 qui comprend une première extrémité 56 en contact avec la came 53, une deuxième extrémité 57 opposée sollicitée par le ressort de rappel 52, ainsi qu'une ailette latérale 58, faisant saillie par rapport au corps 55, formant ladite première portion d'actionnement 54, et coopérant avec ladite extrémité 46 du pion d'obturation 39.

Le pion d'obturation 39 et l'actionneur 51 sont positionnés et dimensionnés pour que le déplacement de l'actionneur 51 déplace le pion d'obturation 39 de sa position fermée à sa position ouverte, et ainsi la soupape 37, et donc l'échappement 34, de sa position fermée à sa position ouverte.

Ainsi, comme visible sur les figures 4 à 7, avant connexion, le pion d'obturation 39 est en position fermée. Au cours de la connexion, l'utilisateur actionne le levier de l'organe de commande d'actionnement 33, de sorte que la surface de came 31 commence à coopérer avec le suiveur de came 32 de manière à rapprocher l'un de l'autre les premier et deuxième connecteurs hydrauliques 2 et 3. Simultanément, la rotation du levier cause la rotation de la came 53 qui, à son tour cause le déplacement de l'actionneur 51 dans le passage 50 à l'encontre de la sollicitation du ressort de rappel 52. Lors de ce déplacement lui-même, les ailettes 58 de l'actionneur 51 coopèrent avec l'extrémité 46 du pion d'obturation 39, et le pion d'obturation 39 est déplacé dans le passage interne 42 à l'encontre de la sollicitation exercée par le ressort de rappel 38. L'échappement hydraulique 34 passe alors de sa configuration fermée à une configuration ouverte, dans laquelle le fluide hydraulique est libre de s'échapper de la chambre 15. Plus précisément, dans le mode de réalisation présenté, le fluide hydraulique s'écoule de la chambre 15 à travers les canaux 47, 48, le passage 42 et le passage 50 en direction d'un réservoir de fluide hydraulique. Ainsi, la pression dans la chambre 15 est abaissée.

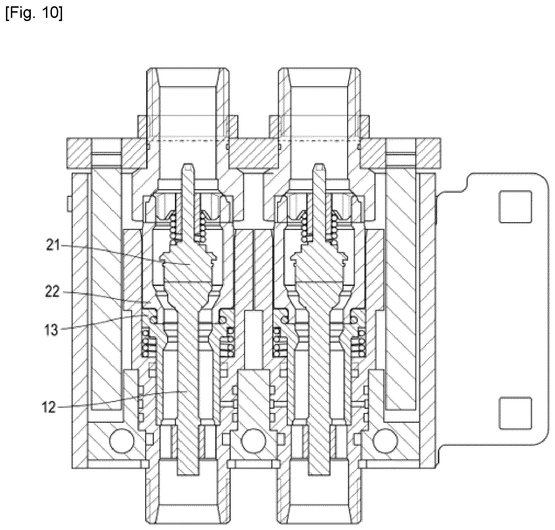

Lors de la poursuite du mouvement d'actionnement de l'organe de commande d'actionnement 33, comme visible sur la figure 9, la poursuite du rapprochement des premier et deuxième connecteurs hydrauliques 2, 3 cause l'entrée en contact des coupleurs 12 et 21. Lors de la poursuite du mouvement d'actionnement de l'organe de commande d'actionnement 33, comme visible sur la figure 10, la jupe 22 du deuxième connecteur hydraulique 3 coopère de manière étanche avec la jupe 13 du premier connecteur hydraulique, et la jupe 22 du deuxième connecteur repousse la jupe 13 du premier connecteur en compressant le ressort de rappel 61. Le bouchon 14 du coupleur 12 du premier connecteur hydraulique 2 repousse le bouchon 23 du coupleur 21 du deuxième connecteur hydraulique 3, à l'encontre de la sollicitation élastique exercée par le ressort de rappel 62 sur celui-ci, de manière à autoriser le passage du fluide hydraulique entre une jupe radialement externe formée par les jupes 13 et 22 et les deux bouchons 14, 23, radialement internes, en appui l'un sur l'autre. Grâce à la décompression réalisée via l'échappement hydraulique 34 dans la chambre 15, le fluide hydraulique restant est libre de s'écouler dans la chambre 15, et la connexion mécanique des connecteurs hydrauliques est moins gênée par la pression hydraulique rémanente dans les connecteurs.

Dans le même temps, la came 53 autorise le déplacement de l'actionneur 51 vers sa position initiale sous l'effet du ressort de rappel 52, et les ressorts de rappel 38 repoussent les pions d'obturation 39 vers la configuration fermée de l'échappement hydraulique 34. Ainsi, l'échappement hydraulique 34 est fermé.

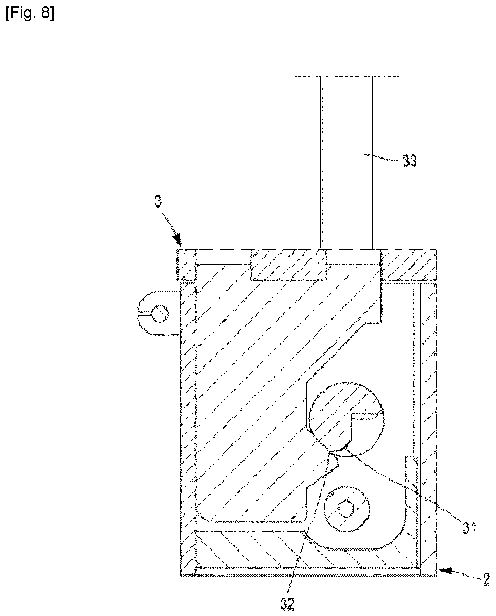

Comme représenté sur la figure 8, dans cette position, la surface de came 31 a coopéré avec le suiveur de came 32 de manière à rapprocher l'un de l'autre les premier et deuxième connecteurs hydrauliques 2 et 3.

Lors d'une utilisation ultérieure du système hydraulique, le fluide hydraulique commandé pour s'écouler dans les passages hydrauliques 8 ne s'écoule pas par l'échappement hydraulique 34, mais s'écoule en direction du passage 17 correspondant dans la configuration connectée du système de connexion hydraulique.

Plus précisément, selon un premier exemple de réalisation, sous la commande exercée via un système de commande 63, la pompe 60 génère l'écoulement du fluide hydraulique sous pression à travers les premiers passages 8a et 17a, alors que les deuxièmes passages 8b et 17b forment une ligne de retour basse pression à destination du réservoir de fluide hydraulique. Il est également possible que, en alternative, selon l'actionnement commandé, la pompe génère l'écoulement du fluide hydraulique sous pression à travers les deuxièmes passages 8b et 17b, alors que les premiers passages 8a et 17a forment une ligne de retour basse pression à destination du réservoir de fluide hydraulique.

Le système de connexion hydraulique peut être déconnecté par une suite inverse d'opérations des opérations décrites ci-dessus de connexion. Au cours de celles-ci, l'échappement hydraulique 34 est ouvert pour autoriser la sortie du fluide hydraulique contenu dans la chambre 15, ce qui permet une connexion mécanique ultérieure facilitée, puis est refermé.

En variante ou en complément, les échappements hydrauliques 34 pourraient être prévus dans le deuxième connecteur hydraulique 3.

Selon le mode de réalisation qui vient d'être décrit, on prévoit une ligne hydraulique reliant la sortie de l'échappement hydraulique 34 au réservoir de fluide hydraulique.

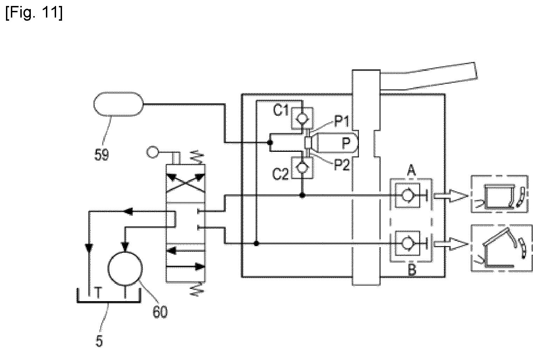

Selon une variante de réalisation, comme représenté sur la figure 11, on n'utilise pas une ligne additionnelle reliant le premier connecteur 2 au réservoir 5. Ce mode de réalisation utilise un accumulateur 59 en aval des passages 50. Ainsi, lors de la décompression, le fluide hydraulique s'échappant via l'échappement 34 s'accumule dans l'accumulateur 59. Lors de l'actionnement de l'outil, en supposant par exemple que les coupleurs 8a et 21a sont disposés dans le canal haute pression, et que les coupleurs 8b et 21b sont disposés dans le canal de retour sous basse pression, la pression dans l'accumulateur 59 est supérieure à cette basse pression, de sorte que le fluide hydraulique peut s'écouler depuis l'accumulateur 59 jusqu'au réservoir 5 via l'échappement 34 à travers le clapet anti-retour C1 du côté basse pression. Lors de l'actionnement de l'outil, en supposant par exemple que les coupleurs 8b et 21b sont disposés dans le canal haute pression, et que les coupleurs 8a et 21a sont disposés dans le canal de retour sous basse pression, la pression dans l'accumulateur 59 est supérieure à cette basse pression, de sorte que le fluide hydraulique peut s'écouler depuis l'accumulateur 59 jusqu'au réservoir 5 via l'échappement 34 à travers le clapet anti-retour C2 du côté basse pression.

### LISTE DES SIGNES DE RÉFÉRENCE

1 : système de connexion hydraulique
2 : premier connecteur hydraulique
3 : deuxième connecteur hydraulique
4 : engin roulant motorisé
5 : réservoir de fluide hydraulique
6 : outil
7 : boitier
8 : passages hydrauliques
9 : extrémité arrière
10 : extrémité avant
11 : face de connexion
12 : coupleur hydraulique
13 : jupe
14 : bouchon
15 : chambre
16 :boitier
17 : passages hydrauliques
18 : extrémité arrière
19 : extrémité avant
20 : face de connexion
21 : deuxième coupleur hydraulique
22 : jupe externe
23 : bouchon
24 : chambre hydraulique
25, 26 : face frontale
27 : système mécanique d'assistance à la connexion
28, 29 : premier et deuxième dispositifs mécaniques
30 : Came
31 : Surface de came
32 : suiveur de came
33 : organe de commande d'actionnement
34 : échappement hydraulique
35 : première extrémité
36 : deuxième extrémité
37 : soupape
38 : ressort de rappel
39 : pion d'obturation
40 : siège
41 : jupe
42 : passage interne
43 : canal
44 : tête
45 : corps
46 : extrémité
47 : canal
48 : canal
49 : système d'actionnement
50 : passage
51 : actionneur
52 : ressort de rappel
53 :came
54 : portion d'actionnement
55 : corps
56, 57 : 1°, 2° extrémités
58 : ailette latérale
59 : accumulateur
60 : pompe
61, 62 : ressort de rappel
63 : système de commande

## Revendications

1. Système de connexion hydraulique comprenant un premier connecteur hydraulique (2) et un deuxième connecteur hydraulique (3),
le système de connexion hydraulique comprenant un système mécanique d'assistance à la connexion (27), le système mécanique d'assistance à la connexion (27) comprenant un premier et un deuxième dispositifs mécaniques (28, 29) portés respectivement par l'un et l'autre des premier et deuxième connecteurs hydrauliques (2, 3), le premier dispositif mécanique (28) comprenant un organe de commande d'actionnement (33), et coopérant mécaniquement avec le deuxième dispositif mécanique (29) de sorte qu'un actionnement de l'organe de commande d'actionnement (33) par un opérateur génère un mouvement relatif des premier et deuxième connecteurs hydrauliques (2, 3) entre une configuration déconnectée et une configuration connectée du système de connexion hydraulique,
le premier connecteur hydraulique (2) comprenant au moins un premier coupleur hydraulique (8a, 8b),
le deuxième connecteur hydraulique (3) comprenant au moins un deuxième coupleur hydraulique (21a, 21b),
chaque coupleur hydraulique (8, 21) comprenant une jupe externe (13, 22) et un bouchon interne (14, 23) définissant entre eux une chambre hydraulique (15, 24), le bouchon interne (14, 23) et la jupe externe (13, 22) correspondante étant montés mobiles axialement l'un par rapport à l'autre entre une configuration fermée où ils coopèrent de manière étanche l'un avec l'autre de manière à fermer la chambre (15, 24), et une configuration ouverte dans laquelle la chambre (15, 24) est ouverte, le bouchon interne (14, 23) et la jupe externe (13, 22) correspondante étant sollicités l'un par rapport à l'autre vers la configuration fermée dans la configuration déconnectée du système de connexion hydraulique,
les premier et deuxièmes coupleurs hydrauliques (8, 21) étant placés, en configuration connectée du système de connexion hydraulique, en configuration ouverte pour autoriser une circulation de fluide hydraulique entre le premier et le deuxième connecteurs hydrauliques (2, 3),
**Caractérisé en ce qu'**au moins une jupe externe (13, 22) comprend un échappement hydraulique (34), et **en ce que** le système de connexion hydraulique comprend en outre un pion d'obturation (39) synchronisé à l'organe de commande d'actionnement (33) adapté pour ouvrir et/ou fermer l'échappement hydraulique (34) au cours de l'actionnement de l'organe de commande d'actionnement (33).

2. Système de connexion hydraulique selon la revendication 1, dans lequel le premier connecteur hydraulique (2) comprend au moins deux premiers et coupleurs hydrauliques (8a, 8b), dans lequel le deuxième connecteur hydraulique (3) comprend au moins deux deuxièmes coupleurs hydrauliques (21a, 21b), et dans lequel une première paire de premier et deuxième coupleurs hydrauliques (8a, 21a) forment un côté haute pression du système de connexion hydraulique, et une deuxième paire de premier et deuxième coupleurs hydrauliques (8b, 21b) forment un côté basse pression du système de connexion hydraulique.

3. Système de connexion hydraulique selon la revendication 1 ou 2, dans lequel l'organe de commande d'actionnement (33) est solidaire d'une came formée pour déplacer le pion d'obturation (39) à l'encontre de la sollicitation d'un organe de sollicitation (38).

4. Système de connexion hydraulique selon la revendication 3, dans lequel ladite came est adaptée pour déplacer un actionneur (51) à l'encontre de la sollicitation d'un organe de sollicitation (38), ledit actionneur (51) étant adapté pour déplacer au moins deux pions d'obturation (39) associés chacun à un coupleur (8a, 8b) respectif.

5. Système de connexion hydraulique selon l'une des revendications 1 à 4, dans lequel le pion d'obturation (39) est synchronisé à l'organe de commande d'actionnement (33) de façon qu'un passage de l'organe de commande d'actionnement (33) d'une première position correspondant à la configuration déconnectée des premier et deuxième connecteurs hydrauliques à une deuxième position correspondant à la configuration connectée des premier et deuxième connecteurs hydrauliques cause, dans une première phase, l'ouverture de l'échappement hydraulique (34) puis, dans une deuxième phase, la fermeture de l'échappement hydraulique (34).

6. Système de connexion hydraulique selon l'une des revendications 1 à 5, comprenant en outre un accumulateur (59) disposé en aval de l'échappement hydraulique (34).

7. Connecteur hydraulique comprenant l'ensemble des caractéristiques du premier connecteur hydraulique d'un système de connexion hydraulique selon l'une quelconque des revendications 1 à 6.

8. Procédé de connexion ou de déconnexion hydraulique dans lequel
disposant d'un premier connecteur hydraulique (2) et d'un deuxième connecteur hydraulique (3),
disposant d'un système mécanique d'assistance à la connexion (27), le système mécanique d'assistance à la connexion (27) comprenant un premier et un deuxième dispositifs mécaniques (28, 29) portés respectivement par l'un et l'autre des premier et deuxième connecteurs hydrauliques (2, 3), le premier dispositif mécanique (28) comprenant un organe de commande d'actionnement (33), et coopérant mécaniquement avec le deuxième dispositif mécanique (29) de sorte qu'un actionnement de l'organe de commande d'actionnement (33) par un opérateur génère un mouvement relatif des premier et deuxième connecteurs hydrauliques (2, 3) entre une configuration déconnectée et une configuration connectée du système de connexion hydraulique,
le premier connecteur hydraulique (2) comprenant au moins un premier coupleur hydraulique (8a, 8b),
le deuxième connecteur hydraulique (3) comprenant au moins un deuxième coupleur hydraulique (21a, 21b),
chaque coupleur hydraulique (8, 21) comprenant une jupe externe (13, 22) et un bouchon interne (14, 23) définissant entre eux une chambre hydraulique (15, 24), le bouchon interne (14, 23) et la jupe externe (13, 22) correspondante étant montés mobiles axialement l'un par rapport à l'autre entre une configuration fermée où ils coopèrent de manière étanche de manière à fermer la chambre (15, 24), et une configuration ouverte dans laquelle la chambre (15, 24) est ouverte, le bouchon interne (14, 23) et la jupe externe (13, 22) correspondante étant sollicités l'un par rapport à l'autre vers la configuration fermée dans la configuration déconnectée du système de connexion hydraulique,
les premier et deuxièmes coupleurs hydrauliques (8, 21) étant placés, en configuration connectée du système de connexion hydraulique, en configuration ouverte pour autoriser une circulation de fluide hydraulique entre le premier et le deuxième connecteurs hydrauliques (2, 3),
au moins une jupe externe (13, 22) comprenant un échappement hydraulique (34), et le système de connexion hydraulique comprenant en outre un pion d'obturation (39) synchronisé à l'organe de commande d'actionnement (33) adapté pour alternativement ouvrir ou fermer l'échappement hydraulique (34) au cours de l'actionnement de l'organe de commande d'actionnement (33),
un opérateur actionne l'organe de commande d'actionnement (33) de manière à générer de manière synchronisée :
- un mouvement relatif des premier et deuxième connecteurs hydrauliques (2, 3) entre une configuration déconnectée et une configuration connectée du système de connexion hydraulique et
- l'ouverture et/ou la fermeture de l'échappement hydraulique (34) par un pion d'obturation (39).
